# FASCICULE DE BREVET EUROPEEN

(11) **EP 1 590 280 B1**
(45) Date de publication et mention de la délivrance du brevet: **18.07.2007**
(21) Numéro de dépôt: 04700657.2
(22) Date de dépôt: 08.01.2004
(51) Int. Cl.: B65G 53/56

(54) **AIGUILLAGES DE TRANSPORT TUBULAIRE ET METHODE D'AIGUILLAGE POUR TRANSPORT TUBULAIRE**
FÖRDERLEITUNGSWEICHEN UND SCHALTVERFAHREN FÜR FÖRDERLEITUNGEN
TRANSPORT TUBING SWITCHES AND TRANSPORT TUBING SWITCHING METHOD

(30) Priorité: 10.01.2003 BE 200300022
(43) Date de publication de la demande: 02.11.2005
(73) Titulaire: Aubry, Michel, 1660 St. Pieters-Leeuw (BE)
(72) Inventeur: Aubry, Michel, 1660 St. Pieters-Leeuw (BE)
(74) Mandataire: Leherte, Georges M.L.M.
(86) Numéro de dépôt international: PCT/BE2004/000001
(87) Numéro de publication internationale: WO 2004/063063

(56) Documents cités:
- DE-A- 4 028 582
- DE-A- 19 521 301
- FR-A- 501 088

## Description

L'invention concerne les aiguillage de transport tubulaire, plus précisément dans le domaine du transport tubulaire pneumatique ou du transport tubulaire de fluides, en particulier de tels aiguillages dits « multivoies ».

Le transport pneumatique de tout produit tel que pulvérulents, granules, graines, sable, minerais etc. devient de plus en plus important et le marché ne propose principalement que des dispositifs à 2 voies, en « Y » ou en « T ».

Certaines propositions ont été élaborées pour réaliser des aiguillages à trois ou quatre voies.

On connaît ainsi le brevet américain 3.826.539 décrivant un « aiguillage » à trois voies dans un systèmes de distribution de matériaux pulvérulents dans l'industrie de la métallurgie. Cet « aiguillage » consiste en réalité en un ou plusieurs tubes de connexion, courbe et/ou rectiligne, disposés sur, ou suspendus à, un moyen de déplacement approprié, utilisé pour faciliter les changements de connexions.

La publication allemande DE 297 10 193 U1 quant à elle décrit un aiguillage de distribution à trois ou quatre voies impliquant un raccordement tubulaire d'amenée disposé verticalement et trois ou quatre raccordements tubulaires d'évacuation horizontaux dont certains peuvent être condamnés par un dispositif rotatif d'obturateurs.

La publication allemande 40 28 582 A1, décrit un aiguillage de distribution tubulaire, comprenant deux stators concentriques, de manière qu'il soit possible de relier sélectivement un raccordement tubulaire à quatre autres raccordements tubulaires

Etat de la technique proche de l'invention, la publication allemande DE 195 21 301 A1, décrit un aiguillage de distribution tubulaire, comprenant un stator muni de quatre à six raccordements tubulaires et un rotor comportant un ou plusieurs (jusqu'à trois) raccordement(s) (courbe(s) et/ou droit) permettant de réaliser jusqu'à quatre connexions différentes, au maximum, entre deux raccordements tubulaires du stator.

Le brevet français 501.088 décrit un appareil pour la manipulation de matières pulvérulentes mettant en oeuvre un « robinet » ou aiguillage comprenant un stator pourvu de six raccordements tubulaires et un rotor comportant trois cavités de connexion ayant trois courbures distinctes, permettant de relier deux raccordements tubulaires du stator. La disposition des raccordement tubulaires et l'agencement des cavités de connexion fait que le nombre de sélections ou voies de ce « robinet » ou aiguillage est limité à trois.

D'autres propositions tendent à réaliser des aiguillages à plusieurs voies, mais à connexions non réversibles.

La présente invention a pour objectif de remédier aux inconvénients des solutions proposées par l'état de la technique, à la fois en ce qui concerne la simplicité de construction et d'utilisation du dispositif d'aiguillage, en ce qui concerne le nombre de connexions qu'un tel dispositif permet de réaliser, et en ce qui concerne la réversibilité des connexions essentielles du dispositif.

Dans ce but, l'invention réalise un aiguillage de transport tubulaire pneumatique ou de transport tubulaire de fluides selon la revendication 1.

L'expression « courbure » concernant la « cavité de connexion », tel qu'utilisée dans le présent contexte désigne le rayon de courbure ou l'angle entre les axes de l'entrée et de la sortie de ladite cavité (tubulaire) de connexion. Cet angle peut être aigu, droit ou obtus, voire même à 180° (correspondant à une cavité de connexion rectiligne).

Selon l'invention, l'aiguillage peut opérer d'une façon multivoie, sélective et réversible.

Selon un premier mode de réalisation préféré de l'invention, le rotor peut comporter au moins une cavité de connexion rectiligne, une cavité de connexion à courbure de 120° et une cavité de connexion à courbure de 60°.

Dans ce mode de réalisation le stator peut être pourvu, de manière avantageuse, de six raccordements tubulaires, disposés à une distance radiale mutuelle de 60°.
Il va sans dire que le stator peut également être pourvu de raccordements tubulaires supplémentaires, disposés entre les six raccords mentionnés ; ces raccords supplémentaires peuvent, de préférence, être également disposés, entre eux, à une distance radiale de 60°.

Selon un deuxième mode de réalisation préféré de l'invention, le rotor peut comporter au moins une cavité de connexion rectiligne, une cavité de connexion à courbure de 120°, une cavité de connexion à courbure de 90° et une cavité de connexion à courbure de 60°.

Dans ce mode de réalisation le stator peut être pourvu, de manière avantageuse, de huit raccordements tubulaires, dont deux sont disposés à une distance radiale mutuelle de 180° et les autres à une distance radiale de, respectivement, 60°, 90° et 120° des premiers.

Selon un troisième mode de réalisation préféré de l'invention, le rotor peut comporter au moins une cavité de connexion rectiligne, une cavité de connexion à courbure de 135°, une cavité de connexion à courbure de 90° et une cavité de connexion à courbure de 45°.

Dans ce mode de réalisation le stator peut être pourvu, de manière avantageuse, de huit raccordements tubulaires, disposés à une distance radiale mutuelle de 45°.

Selon l'invention, le corps cylindrique peut être constitué d'un corps coulé (moulé, « coulé » dans un moule) ou d'un corps mécano soudé.
Le corps cylindrique peut comporter des moyens de fixation taraudés, destinés à munir ledit corps cylindrique de brides de raccordement tubulaires amovibles et/ou de plaquettes d'obturation d'alésages en surnombre.

L'invention concerne, enfin, de manière spécifique, une méthode d'aiguillage pour le transport tubulaire pneumatique ou le transport tubulaire de fluides selon la revendication 2.

Comme il sera expliqué plus en détail en se référant aux figures, l'invention permet la réalisation d'aiguillages à cinq ou sept voies (sélectifs et 100% « réversibles ») ou plus, ou d'aiguillages à sept voies ou plus (dont certaines « réversibles »).

Les possibilités offertes par ce nouveau type d'aiguillage permet de résoudre la majorité des cas rencontrés dans les transports pneumatique.
Là où une batterie de 24 silos nécessitait 23 aiguillages à deux voies, ce nouvel aiguillage permet de le réduire à six aiguillages à cinq voies, ou quatre aiguillages à sept voies.

Les principaux avantages résident en :
un coût de l'installation moins élevé
une simplification de l'installation
l'utilisation de moins d'éléments
une automatisation plus simple
une diminution du stock de pièces de rechange

Ce type d'aiguillage permet de travailler en tant que rassembleur ou « disperseur », c'est-à-dire (à titre d'exemples non-limitatifs)
le transport
1) a) depuis un engin (train, wagon de chemin de fer) vers un groupe de silos
   b) d'un groupe de silos vers un engin de transport
2) a) d'un parc à silos vers une unité de production ou de conditionnement
   b) d'une unité de production vers un groupe de silos

D'autres caractéristiques et particularités de l'invention apparaîtront à la lecture de la description qui suit de deux réalisations spécifiques de l'aiguillage de transport tubulaire selon l'invention, exposées à titre d'exemple purement illustratif, en se référant aux dessins annexés, dans lesquels :
la figure 1 montre schématiquement, le principe d'un aiguillage à 5 voies, selon l'invention, muni d'un rotor à 3 tubes de connexion ;
La figure 2 montre schématiquement, le principe d'un aiguillage à 7 voies, selon l'invention, muni d'un rotor à 4 tubes de connexion ;
La figure 3 montre schématiquement, le principe d'un autre aiguillage à 7 voies, selon l'invention, muni d'un rotor à 4 tubes de connexion ;

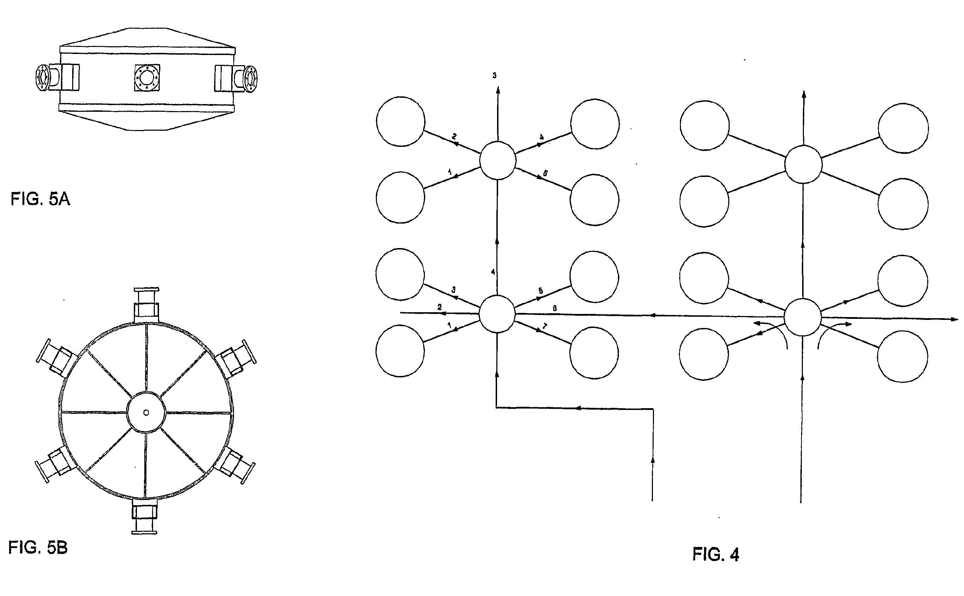

La figure 4 illustre schématiquement, le genre de connexions multivoies réalisables avec deux aiguillages selon la figure 1 et deux aiguillages selon la figure 2 ;
Les figures 5a et 5b sont une vue latérale et une vue de dessous d'un mode de réalisation de l'aiguillage selon le schéma de la figure 1 ;

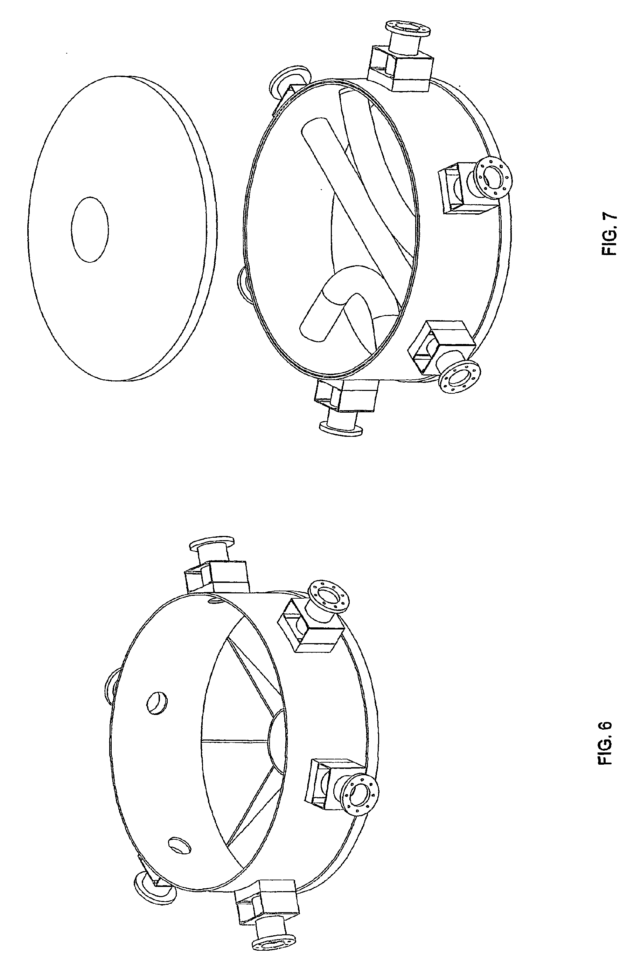

La figure 6 est une vue en perspective de la cuve (le stator) de l'aiguillage selon la figure 5a et 5b ;
La figure 7 est une vue éclatée, en perspective, de l'aiguillage selon la figure 6, montrant la cuve, le rotor et un couvercle de finition ;

Il est souligné que les détails de ces exemples ne limitent en rien la portée de l'invention telle qu'exposée dans la description ci dessus et telle qu'énoncée dans les revendications qui suivent.

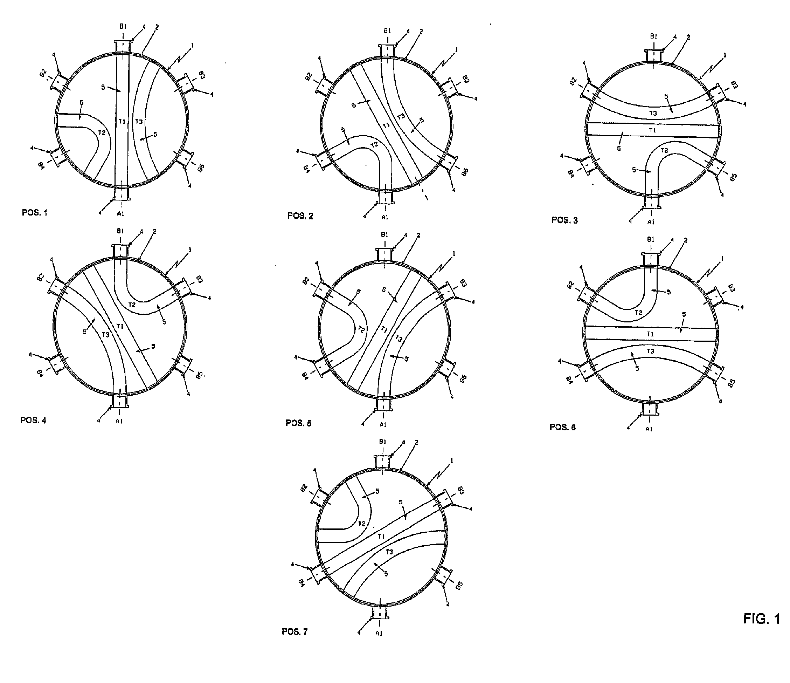

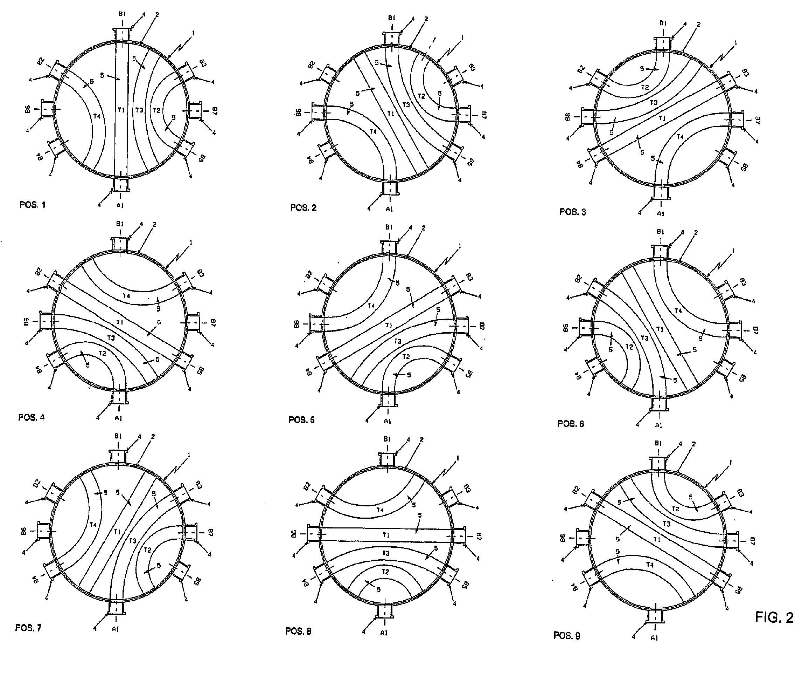

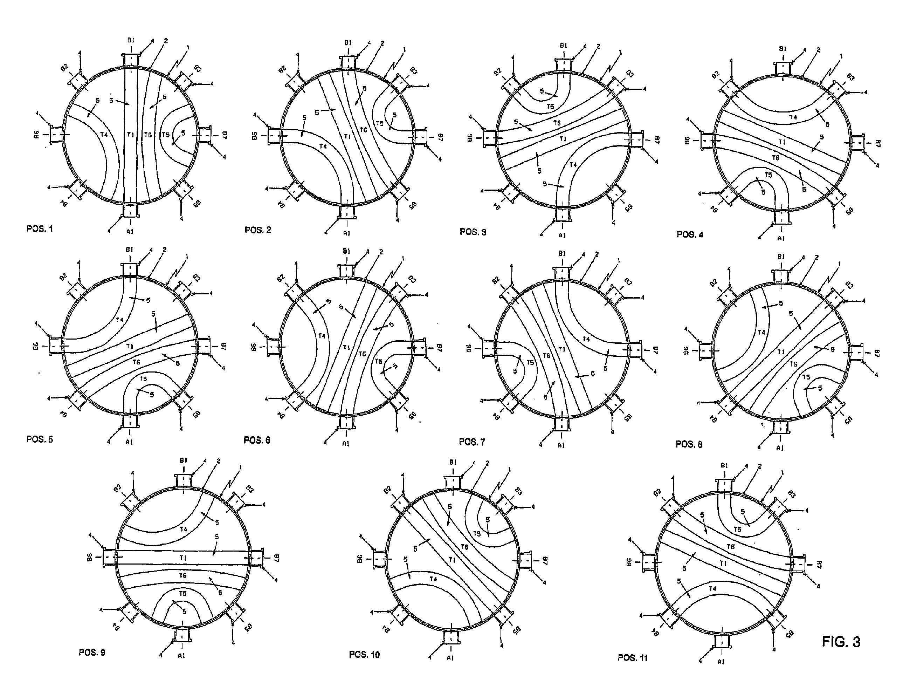

Comme le montrent les figures 1, 2 et 3, l'ensemble de l'aiguillage est donc constitué d'un stator (bâti) 1 et d'un rotor 2.
Le stator 1 est constitué d'un caisson avec une chambre cylindrique pourvu à l'extérieur de six (figure 1) ou huit (figures 2 et 3) brides de raccordement tubulaires 4, fixes, faisant partie du corps du caisson, ou amovibles.
Le rotor 2 est constitué d'une pièce cylindrique qui tourne dans le stator 1 et pourvu de trois (figure 1) ou quatre (figures 2 et 3) tubes 5 ; un droit et deux (figure 1) ou trois (figures 2 et 3) tubes de courbures (angles) différentes, fixes ou démontables.

Dans le cas de l'aiguillage à six brides (montré à la figure 1) constituant une entrée A1 et cinq sorties B1 - B5 (ou 2 entrées, 4 sorties, etc.), ou l'inverse, les axes des six brides sont répartis à une intervalle mutuelle de 60°.

Les tubes de connexion T1 (tube à angle de 180° = tube droit), T2 (tube à angle de 60°) et T3 (tube à angle de 120°) permettent alors de connecter l'entrée A1 avec, au choix, n'importe quelle sortie B1 - B5.
Ces fonctions sont en outre réversibles puisque les distances angulaires entre les différentes brides sont uniformes. On dispose ainsi d'un système « à double répartition ».

Dans le cas de l'aiguillage à huit brides, montré à la figure 2, le stator comporte en fait deux brides supplémentaires B6 et B7, à un angle de 90° par rapport à la bride d'entrée A1.
Le rotor quant à lui comporte quatre tubes de connexion, à savoir un tube rectiligne T1 (tube à angle de 180° = tube droit), deux tubes courbes T2 (tube à angle de 60°) et T3 (tube à angle de 120°) disposés du même coté par rapport au tube T1, et un quatrième tube courbe T4 (tube à angle de 90°) disposé du côté opposé par rapport au tube T1.

Dans le cas de l'aiguillage à huit brides, montré à la figure 3, le stator comporte une bride d'entrée A1 et sept brides de sortie B1 - B7 (ou 2 entrées, 6 sorties, etc.), ou l'inverse, et les axes des huit brides sont répartis à une intervalle mutuelle de 45°.
Le rotor quant à lui comporte quatre tubes de connexion, à savoir un tube rectiligne T1 (tube à angle de 180° = tube droit), deux tubes courbes T5 (tube à angle de 45°) et T6 (tube à angle de 135°) disposés du même coté par rapport au tube T1, et un quatrième tube courbe T4 (tube à angle de 90°) disposé du côté opposé par rapport au tube T1.

### Fonctionnement :

Dans le cas de l'aiguillage à six voies, la position du rotor illustrée dans le premier schéma de la figure 1 (position 1), permet le passage de A1 vers B1 ou B1 vers A1, via le tube T1.
Comme l'illustre la figure 1, la rotation du rotor met en relation A1 avec B4 ou A1 avec B5, via le tube T2 (positions 2 et 3), ou A1 avec B2 ou A1 avec B3, via le tube T3(positions 4 et 5).
Il est par ailleurs possible d'alimenter, avec T2 et T3, les quatre brides B2 - B5 à partir de B1 : dans le cas qui nous occupe T2 mettrait en liaison B1 avec B3 (positions 4) ou B2 (position 7), et T3 mettrait en liaison B1 avec B5 (position 2) et B4 (position non illustrée), ce qui permet d'obtenir un système réversible.
L'ensemble permet aussi, par exemple, une connexion simultanée B1/B5 (via T3), lors de la mise en connexion A1/B4 (via T2), comme illustré par la position 2. D'autres connexions simultanées similaires ou des connexions alternatives (comme par exemple les positions 6 et 7) peuvent aisément être imaginées à partir de la figure 1.

Dans le cas de l'aiguillage à huit brides (sept voies), illustré à la figure 2, on peut réaliser le même genre de connexions (via T1, T2 et T3) que celles énoncées pour l'aiguillage à six brides (positions 1, 4, 5, 6 et 7). On peut, en outre, réaliser, via T4, les connexions de A1 vers B6 ou B7 (positions 2 et 3), et de B1 vers B7 (position 6) ou B6 (position 5).

De même, l'ensemble à huit brides permet les connexions simultanées similaires à celles de l'aiguillage à six brides décrit plus haut, certaines connexions simultanées supplémentaires, et certaines connexions alternatives (comme par exemple les positions 8 et 9), qu'on déduira aisément de la figure 2.

Dans le cas de l'aiguillage à huit brides (sept voies), illustré à la figure 3, on peut réaliser les connexions de A1 vers B1, via T1 (position 1),
de A1 vers B6 et B7, via T4 (positions 2 et 3),
de A1 vers B4 et B5, via T5 (positions 4 et 5),
de A1 vers B2 et B3, via T6 (positions 7 et 6).
On peut, en outre, réaliser les connexions de B1 vers B6 ou B7 (positions 5 et 7) via T4, vers B2 (position 3) ou B3 (position 11) via T5, ou vers B5 (position 2) ou B4 (position non illustrée) via T6 ; les connections B2/B4 via T4 et B5/B7 via T5 (position 6) ; etc., etc.
De même, cet ensemble permet d'autres connexions simultanées similaires ou supplémentaires et d'autres connexions alternatives, qu'on déduira aisément de la figure 3 (comme par exemple les positions 9, 10 et 11).

Il est enfin à signaler que de nombreuses variantes de l'aiguillage apparaîtront aisément à l'homme de l'art sans sortir de la portée de l'invention.

On peut ainsi, notamment, concevoir un aiguillage avec un stator à douze brides (six brides A1 et B1 - B5 et six brides B6 - B11 disposées entre les brides A1, B1- B5), réparties uniformément à une distance angulaire de 30° autour du corps cylindrique, associé à un rotor selon la figure 2.

Un tel aiguillage reste un aiguillage à sept voies à partir de l'entrée A1, mais augmente considérablement la possibilité de connexions inverses et de connexions simultanées.

On peut également concevoir un aiguillage à cinq voies, comprenant un stator muni de six brides à des positions radiales de 0, 45, 135, 180, 225 et 315° et un rotor comportant des cavités de connexion à courbure de 45°, 135° et 180°, correspondant ainsi à un aiguillage tel qu'illustré à la figure 3, toutefois sans les sorties B6 et B7 et sans le tube T4 ; il va sans dire que dans une telle rélisation les tubes T5 et T6 peuvent aussi être disposés de chaque coté du tube droit T1 (comme pour les tubes T2 et T3 de l'aiguillage à cinq voies, illustré à la figure 1).

## Revendications

1. Aiguillage de transport tubulaire pneumatique ou de transport tubulaire de fluides, comprenant un corps cylindrique destiné à un stator (1) pourvu d'au moins six raccordements tubulaires et un rotor (2) comportant au moins trois cavités de connexion (5) ayant des courbures distinctes, permettant de relier sélectivement deux raccordements tubulaires (4) du stator, **caractérisé en ce qu'**il permet l'aiguillage multivoie, sélectif et réversible, à partir d'un raccordement tubulaire (A1) vers au moins cinq raccordements tubulaires distincts (B1-B5; B1-B7) par l'association d'un stator (1) pourvu des raccordements tubulaires disposés radialement et symétriquement par rapport à l'axe dudit corps cylindrique et d'un rotor (2) selon l'une ou l'autre des alternatives suivantes :
un stator (1) pourvu de six raccordements tubulaires (4) disposés à une distance radiale mutuelle de 60 °, et un rotor (2) comportant des cavités de connexion (5) à courbures de 60°, 120° et 180°(cavité droite); un stator (1) pourvu de huit raccordements tubulaires (4) disposés à une distance radiale mutuelle de 45 °, et un rotor (2) comportant des cavités de connexion (5) à courbures 45°, 90°, 135° et 180°(cavité droite);
un stator (1) pourvu de huit raccordements tubulaires (4) dont deux sont disposés à une distance radiale mutuelle de 180° et les autres à une distance radiale de, respectivement, 60°, 90° et 120° des premiers, et un rotor (2) comportant des cavités de connexion (5) à courbures de 60°, 90°, 120° et 180° (cavité droite).

2. Méthode d'aiguillage pour le transport tubulaire pneumatique ou le transport tubulaire de fluides, impliquant le déplacement d'un rotor (2) comportant plusieurs cavités de connexion (5) ayant des courbures distinctes, par rapport à un corps cylindrique destiné à un stator (1) pourvu de plusieurs raccordements tubulaires (4), **caractérisé en ce qu'**il permet l'aiguillage multivoie, sélectif et réversible, à partir d'un raccordement tubulaire (A1) vers au moins cinq raccordements tubulaires distincts (B1-B5; B1-B7) par l'association d'un stator (1) pourvu des raccordements tubulaires disposés radialement et symétriquement par rapport à l'axe dudit corps cylindrique et du rotor (2), en reliant
des raccordements tubulaires (4) disposés mutuellement à 60° par des cavités de connexion (5) à courbures de 60°, 120° et 180° (cavité droite);
des raccordements tubulaires (4) disposés mutuellement à 45° par des cavités de connexion (5) à courbures de 45°, 90°, 135° et 180°; ou
des raccordements tubulaires disposés mutuellement à 60°et 90° par des cavités de connexion (5) à courbures de 60°, 90°, 120° et 180°.

## Claims

1. Switch for pneumatic tubular transport or for tubular transport of fluids, comprising a cylindrical body intended for a stator (1) with at least six tubular connections and a rotor (2) comprising at least three connection cavities (5) with distinct bends, allowing selective connection of two tubular connections (4) of the stator, **characterised by** the fact that it allows the multipath, selective and reversible switching, from a tubular connection (A1) to at least five distinct tubular connections (B1-B5; B1-B7) by the combination of a stator (1) equipped with tubular connections arranged radially and symmetrically in relation to the axis of the said cylindrical body and a rotor (2) according to one or other of the following alternatives:
a stator (1) equipped with six tubular connections (4) arranged at a mutual radial distance of 60°, and a rotor (2) comprising connection cavities (5) with bends of 90°, 120° and 180° (straight cavity); a stator (1) equipped with eight tubular connections (4) arranged at a mutual radial distance of 45°, and a rotor (2) comprising connection cavities (5) with bends of 45°, 90°, 135° and 180° (straight cavity);
a stator (1) equipped with eight tubular connections (4), two of which are arranged at a mutual radial distance of 180° and the others at a radial distance of 60°, 90° and 120° respectively from the first, and a rotor (2) comprising connection cavities (5) with bends of 60°, 90°, 120° and 180° (straight cavity).

2. Switching method for the pneumatic tubular transport or tubular transport of fluids, involving the movement of a rotor (2) comprising several connection cavities (5) with distinct bends, in relation to a cylindrical body intended for a stator (1) equipped with several tubular connections (4), **characterised by** the fact that it allows the multipath, selective and reversible switching, from a tubular connection (A1) to at least five distinct tubular connections (B1-B5; B1-B7) by the combination of a stator (1) equipped with tubular connections arranged radially and symmetrically in relation to the axis of the said cylindrical body and of the rotor (2), by linking tubular connections (4) arranged mutually at 60° by connection cavities (5) with bends of 60°, 120° and 180° (straight cavity);
tubular connections (4) arranged mutually at 45° by connection cavities (5) with bends of 45°, 90°, 135° and 180°; or
tubular connections arranged mutually at 60° and 90° by connection cavities (5) with bends of 60°, 90°, 120° and 180°.

## Patentansprüche

1. Verzweigung für den pneumatischen Rohrtransport oder den Rohrtransport von Flüssigkeiten, mit einem zylindrischen Körper, der für einen Stator (1) dient, der mindestens sechs Rohranschlüsse und einen Rotor (2) aufweist, der mindestens drei Anschlussöffnungen (5) umfasst, die unterschiedliche Rundungen aufweisen, wodurch eine selektive Verbindung von zwei Rohranschlüssen (4) des Stators ermöglicht wird, der sich dadurch auszeichnet, dass er eine selektive und umkehrbare Mehrweg-Verzweigung ermöglicht, ausgehend von einem Rohranschluss (A1) zu mindestens fünf unterschiedlichen Rohranschlüssen (B1-B5 ; B1-B7) dank der Zufügung eines Stators (1), der mit Rohranschlüssen versehen ist, die radial und symmetrisch gegenüber einer Achse des besagten zylindrischen Körpers angebracht sind, und eines Rotors (2), je nach einer der folgenden Alternativen:
ein Stator (1) mit sechs Rohranschlüssen (4), die in einem gegenseitigen Radialabstand von 60° angebracht sind, und ein Rotor (2) mit Anschlussöffnungen (5) in Rundungen von 60°, 120° und 180° (rechte Öffnung);
ein Stator (1) mit acht Rohranschlüssen (4), die in einem gegenseitigen Radialabstand von 45° angebracht sind, und ein Rotor (2) mit Anschlussöffnungen (5) in Rundungen von 45°, 90°, 135° und 180° (rechte Öffnung);
ein Stator (1) mit acht Rohranschlüssen (4), von denen zwei in einem gegenseitigen Radialabstand von 180° und die anderen in einem Radialabstand von 60°, 90° bzw. 120° der ersten angesiedelt sind,
und ein Rotor (2), der Anschlussöffnungen (5) in Rundungen von 60°, 90°, 120° und 180° (rechte Öffnung) aufweist.

2. Verzweigungsmethode für den pneumatischen Rohrtransport oder den Rohrtransport von Flüssigkeiten, wobei ein Rotor (2) verlagert wird, der mehrere Anschlussöffnungen (5) umfasst, die unterschiedliche Rundungen aufweisen, gegenüber einem zylindrischen Körper, der für einen Stator (1) dient, der mit mehreren Rohranschlüssen (4) versehen ist und sich dadurch auszeichnet, dass er eine selektive und umkehrbare Mehrweg-Verzweigung ermöglicht, ausgehend von einem Rohranschluss (A1) zu mindestens fünf unterschiedlichen Rohranschlüssen (B1-B5, B1-B7) dank der Zufügung eines Stators (1), der mit Rohranschlüssen versehen ist, die radial und symmetrisch gegenüber einer Achse des besagten zylindrischen Körpers und des Rotors (2) angesiedelt sind, unter Verbindung
von Rohranschlüssen (4), die gegenseitig in 60° von Anschlussöffnungen (5) mit Rundungen von 60°, 120° und 180° (rechte Öffnung) angebracht sind;
von Rohranschlüssen (4), die gegenseitig in 45° von Anschlussöffnungen (5) mit Rundungen von 45°, 90°, 135° und 180° angebracht sind; oder
von Rohranschlüssen, die gegenseitig in 60° und 90° von Anschlussöffnungen (5) mit Rundungen von 60°, 90°, 120° und 180° angebracht sind.
